(19)

**Europäisches Patentamt**
**European Patent Office**
**Office européen des brevets**

(11) **EP 4 497 760 A1**

(12) **EUROPEAN PATENT APPLICATION**

(43) Date of publication:
29.01.2025 Bulletin 2025/05

(21) Application number: 24190719.5

(22) Date of filing: 24.07.2024

(51) International Patent Classification (IPC):
*C08B 13/00* (2006.01)   *C08L 1/32* (2006.01)

(52) Cooperative Patent Classification (CPC):
C08B 13/00; C08L 1/32

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.07.2023 JP 2023121208

(71) Applicant: Shin-Etsu Chemical Co., Ltd.
Chiyoda-ku,
Tokyo 1000005 (JP)

(72) Inventors:
• KITAGUCHI, Taishi
NIIGATA, 9428601 (JP)
• KUROTANI, Shinichi
TOKYO, 1000005 (JP)
• HOSHINO, Tsuyoshi
TOKYO, 1000005 (JP)
• KITAMURA, Akira
NIIGATA, 9428601 (JP)

(74) Representative: Cabinet Nony
11 rue Saint-Georges
75009 Paris (FR)

(54) **HYDROXYPROPYL METHYLCELLULOSE ACETATE SUCCINATE POWDER, AND METHOD OF PRODUCING THE SAME**

(57) Provided is a method of producing hydroxypropyl methylcellulose acetate succinate powder capable of inhibiting aggregation of particles of the precipitated esterified cellulose ether and reducing produced amount of fine powder to thereby obtain the esterified cellulose ether in high yield. The method of producing hydroxypropyl methylcellulose acetate succinate powder comprises an esterification reaction step, a precipitation step, a washing/recovering step and a drying step, wherein the precipitation step is a step of introducing the reaction solution, obtained in the esterification reaction step, and water into a mixer provided with a rotatable rotor having blades and a perforated plate arranged to surround the rotor in a direction perpendicular to a radial direction of the rotor to allow a suspension, containing precipitated hydroxypropyl methylcellulose acetate succinate particles, to pass through the perforated plate to be discharged therethrough.

EP 4 497 760 A1

**Description**

BACKGROUND OF THE INVENTION

Field of the Invention

The invention relates to hydroxypropyl methylcellulose acetate succinate powder and a method of producing the same.

Background art

Hydroxypropyl methylcellulose acetate succinate (hereinafter also referred to as "HPMCAS") is an esterified cellulose ether synthesized by replacing certain hydrogen atoms within the hydroxyl groups of cellulose with four types, in total, of substituents a methyl group ($-CH_3$), a hydroxypropyl group ($-CH_2CH(OH)CH_3$), an acetyl group ($-COCH_3$) and a succinyl group ($-COC_2H_4COOH$), which is widely used for the applications of, for example, solid dispersion for improving the solubility of poorly water-soluble drugs, and enteric coating of a tablet.

An esterified cellulose ether as typified by HPMCAS can be produced in a known manner. In a known method of producing esterified cellulose, a reaction solution containing an esterified cellulose ether is allowed to be in contact with water to precipitate the esterified cellulose ether, and wash or remove the impurities. Reported examples of such method for making the reaction solution, containing an esterified cellulose ether, in contact with water include a method (Patent document 1) in which a large volume of water is added to the reaction solution, containing the esterified cellulose ether, by the volume of, specifically, ten folds with respect to the volume of the reaction solution; a method (Patent document 2) in which a combination of water and a reaction solution, containing an esterified cellulose ether, is subjected to shear at the rate of at least 800 $s^{-1}$; and a method (Patent document 3) of putting a reaction solution, containing an esterified cellulose ether, into water in a continuous or intermitting manner.

[Prior art documents]

[Patent documents]

[Patent document 1] U.S. pat. No. 4226981
[Patent document 2] JP-A-2015-512456
[Patent document 3] JP-A-2017-501239

SUMMARY OF THE INVENTION

However, the method described in Patent document 1 causes the particles of precipitated esterified cellulose ether to aggregate themselves, which thereby prevents the esterified cellulose ether from being provided in the granular state. The method described in Patent document 1 also has room for improvement because the aggregation of the obtained particles among themselves inhibits water from infiltrating in-between the particles, which thereby prevents impurities from being sufficiently removed. The method described in Patent document 2 uses a precipitated esterified cellulose ether that contains a high proportion of fine powder, and this fine powder may be discharged during filtration or washing of the impurities, which thereby leads to the deterioration of yield. Further, the final product obtained by the method as described in Patent document 2 exhibits poor flowability, and has a problem of being inferior in terms of handleability as being a powder. The method of Patent document 3 produces less amount of fine powder but the resultant esterified cellulose ether particles have distorted shapes and are poor in respect of flowability as being a powder. Moreover, the method of Patent document 3 requires a large volume of water for producing esterified cellulose ether particles, and therefore has a problem of an increasing amount of wastewater to be treated.

The present invention has been made in view of these circumstances, and it is an object of the present invention to provide an esterified cellulose ether powder having improved flowability of the powder, and a method of producing the powder capable of inhibiting aggregation of particles of the precipitated esterified cellulose ether among themselves and preventing fine powder from being produced to thereby obtain the esterified cellulose ether in high yield.

The inventors of the present invention diligently conducted a series of studies to solve the aforementioned objects, and completed the invention by finding that a use of a mixer, provided with a rotatable rotor having blades and a perforated plate arranged to surround the rotor in a direction perpendicular to the radial direction of the rotor, in a precipitation step of producing HPMCAS can prevent coagulation of the precipitated HPMCAS particles while reducing the produced amount of fine powder, lead to the production of HPMCAS in high yield, and provide HPMCAS powder having favorable flowability.

The present invention provides hydroxypropyl methylcellulose acetate succinate powder and a method of producing the hydroxypropyl methylcellulose acetate succinate powder as defined below.

[1] A method of producing hydroxypropyl methylcellulose acetate succinate powder comprising the steps of:

esterifying hydroxypropyl methylcellulose with an acetylating agent and a succinoylating agent in the presence of an aliphatic carboxylic acid to prepare a reaction solution containing hydroxypropyl methylcellulose acetate succinate;

introducing the reaction solution and water into a mixer provided with a rotatable rotor having blades and a perforated plate arranged to surround the rotor in a direction perpendicular to a radial direction of the rotor for precipitation, and allowing a suspension, containing precipitated hydroxypropyl methylcellulose acetate succinate particles, to pass through the perforated plate to be discharged therethrough;

washing the hydroxypropyl methylcellulose acetate succinate particles in the suspension and recovering the washed hydroxypropyl methylcellulose acetate succinate particles; and

drying the washed hydroxypropyl methylcellulose acetate succinate particles.

[2] The method according to [1], wherein the perforated plate has openings each having an opening area of 0.1 to 10.0 mm$^2$.

[3] The method according to [1] or [2], wherein a peripheral speed of the outermost circumference of the blades is 5.0 to 20.0 m/s.

[4] The method according to any one of [1] to [3], wherein 200 to 600 parts by mass of water per 100 parts by mass of the reaction solution is added into the reaction solution.

[5] The method according to any one of [1] to [4], wherein an average particle diameter of the hydroxypropyl methylcellulose acetate succinate particles is 500 to 2000 $\mu$m when the diameter is estimated from particle size distribution of the hydroxypropyl methylcellulose acetate succinate particles in the suspension in accordance with a wet sieving test as set forth in JIS Z8815, and wherein a mass percentage of the particles having a diameter of 250 $\mu$m or less in the total mass of the particles is 15.0% or less.

[6] A hydroxypropyl methylcellulose acetate succinate powder, wherein an average particle diameter of the hydroxypropyl methylcellulose acetate succinate powder as determined in accordance with a dry sieving test as set forth in JIS Z8815 is 300 $\mu$m or more and 1000 $\mu$m or less, the powder has a loose bulk density of 0.30g/mL or less, and a degree of compression of the powder, defined as a ratio of the difference between a tapped bulk density and a loose bulk density relative to the tapped bulk density, is 10% or less.

The present invention can reduce the produced amount of fine powder, produce HPMCAS in high yield and provide HPMCAS powder having favorable flowability. Accordingly, the HPMCAS having been produced in accordance with the production method of the present invention is useful for the applications of, for example, solid dispersion for improving the solubility of poorly water-soluble drugs, and enteric coating of a tablet.

BRIEF DESCRIPTION OF THE DRAWINGS

FIG. 1 is a schematic view illustrating the structures of a rotatable rotor having blades and of a perforated plate arranged to surround the rotor in a direction perpendicular to the radial direction of the rotor.

FIG. 2A is a schematic view illustrating an example of a perforated plate having square openings.

FIG. 2B is a schematic view illustrating an example of a perforated plate having rectangle openings.

FIG. 2C is a schematic view illustrating an example of a perforated plate having round openings.

FIG. 3 shows a flow chart of categorizing complete range of the particles of hydroxypropyl methylcellulose acetate succinate into four types of particles: "Fine particles", "Long fibrous particles (LF1 or LF2)", "Short fibrous particles (SF1 or SF2)" and "Spherical particles (S1 or S2)".

## DETAILED DESCRIPTION OF THE INVENTION

[Method of producing hydroxypropyl methylcellulose acetate succinate powder]

The method of producing hydroxypropyl methylcellulose acetate succinate powder according to the present invention essentially includes an esterification reaction step, a precipitation step, a washing/recovering step and a drying step.

<Esterification reaction step>

In the esterification reaction step, an esterification reaction of hydroxypropyl methylcellulose with an acetylating agent and a succinoylating agent is carried out in the presence of an aliphatic carboxylic acid to obtain a reaction solution containing hydroxypropyl methylcellulose acetate succinate.

Hydroxypropyl methylcellulose (also referred to as "HPMC" hereunder) is a non-ionic water-soluble cellulose ether. HPMC synthesized by a known method or the one that is commercially available may be used. HPMC may for example be prepared in such a manner where a solution of an alkali metal hydroxide such as sodium hydroxide and potassium hydroxide is at first brought into contact with, for example, a sheet-, chip- or powder-like pulp so as to obtain an alkali cellulose, followed by adding an etherifying agent such as methyl chloride and propylene oxide to perform the etherifying reaction.

The degree of substitution (DS) of the methoxy groups of HPMC is preferably 1.10 to 2.20, more preferably 1.40 to 2.00, and still more preferably 1.60 to 2.00, in terms of obtaining HPMC having the reduced number of insoluble fibers. The molar substitution (MS) of the hydroxypropoxy groups of HPMC is preferably 0.10 to 1.00, more preferably 0.20 to 0.80, and still more preferably 0.2 to 0.65, in terms of obtaining HPMC having the reduced number of insoluble fibers.

The insoluble fibers refer to water-insoluble parts of the fibers that are contained in HPMC. HPMC exhibits a water solubility after having the hydroxyl groups in cellulose partially etherified, and thereby weakening the hydrogen bonds in the intra-molecule and inter-molecule of cellulose. Since it is industrially difficult to perform etherification in a perfectly uniform manner, HPMC may contain parts that are insoluble in water, i.e., the insoluble fibers, due to an insufficient degree of substitution of ether groups, or an ununiform substitution of the ether groups. If HPMCAS contains a large number of insoluble fibers in the final product, the yield of an enteric coating preparation will decrease due to an ununiform enteric film, or productivity will decline as filter clogging will frequently occur in a filtration step of the coating solution; it is therefore preferred that HPMC as a raw material of HPMCAS have a small number of the insoluble fibers. The number of the insoluble fibers may for example be calculated by analyzing the HPMC aqueous solution with the aid of a device such as Coulter counter.

It is noted that with respect to HMPC, the DS of the methoxy groups refers to a degree of substitution of the methoxy groups, which is an average number of methoxy groups per number of anhydroglucose unit, and the MS of the hydroxypropoxy groups refers to a molar substitution of the hydroxypropoxy groups, which is an average number of moles of hydroxypropoxy groups per mole of anhydroglucose. The DS of the methoxy groups and the MS of the hydroxypropoxy groups of HPMC may be determined based on the converted values of the values obtained by the respective measurements performed in accordance with the Japanese Pharmacopoeia 18th Edition.

It is preferred in terms of kneadability in the esterification reaction step that the viscosity at 20°C of a 2% by mass aqueous solution of HPMC be 1.0 to 50.0 mPa·s, more preferably 2.0 to 20.0 mPa·s and even more preferably 2.0 to 5.0 mPa·s.

The viscosity at 20°C of a 2% by mass aqueous solution of HPMC may be determined in accordance with the viscosity measurement by capillary tube viscometer under "Viscosity Determination" in "General Tests" of the Japanese Pharmacopoeia, 18th Edition.

Examples of the aliphatic carboxylic acid include an aliphatic carboxylic acid having 2 to 4 carbon atoms such as acetic acid, propionic acid and butyric acid, among which acetic acid is preferred in terms of economy.

It is preferred in terms of dissolving HPMC and increasing the reaction rate that the used amount of the aliphatic carboxylic acid be 3.00 to 10.00 mol, more preferably 4.00 to 8.00 mol, per 1 mol of HPMC.

Examples of the acetylating agent include acetic anhydride and acetyl chloride, among which acetic anhydride is preferred in terms of economy.

The amount of acetylating agent to be used is not particularly limited as long as HPMCAS having a desired degree of substitution is obtained, but in terms of reaction efficiency, it is preferably 0.20 to 1.50 mol, more preferably 0.40 to 1.30 mol, per 1 mol of HPMC.

Examples of the succinoylating agent include succinic anhydride and succinyl chloride, among which succinic anhydride is preferred in terms of economy. The amount of the succinoylating agent to be used is not particularly limited as long as HPMCAS having a desired degree of substitution can be obtained, but it is preferred in terms of reaction efficiency that the amount be 0.10 to 1.50 mol, more preferably 0.20 to 1.20 mol per 1 mol of HPMC.

The esterification reaction may be carried out in the presence of a catalyst. As the catalyst, an alkali metal carboxylate such as sodium acetate and potassium acetate is preferred in terms of economy. The catalyst may be used singly or in combination of two or more as needed. A commercially available catalyst may be used therefor.

The amount of the catalyst to be used may be suitably selected in consideration of the degree of substitution of HPMCAS, but it is preferred in terms of reaction efficiency that the amount be 0.10 to 2.00 mol, more preferably 0.30 to 1.90 mol, per 1 mol of HPMC.

It is preferred in terms of the reaction rate that the reaction temperature in the esterification reaction step be 60 to 120°C, more preferably 60 to 100°C.

The reaction time in the esterification reaction step is preferably 2 to 8 hours, more preferably 3 to 6 hours, in terms of obtaining HPMCAS having a desired degree of substitution.

It is preferred in terms of reaction efficiency that the esterification reaction be performed using a stirring machine capable of uniformly dispersing and mixing highly viscous reaction ingredients. Examples of the stirring machines to be used for the reaction include, but are not particularly limited to, a kneader mixer having twin-shaft stirring blades and a vertical stirring tank having two or more stirring shafts and blades.

After performing the esterification reaction, water may be optionally added as needed to the reaction solution containing HPMCAS for the purpose of treating unreacted acetylating and succinoylating agents and controlling the viscosity of the reaction solution containing HPMCAS so long as the HPMCAS particles are not precipitated to obtain a post-treated reaction solution of HPMCAS (the mixing treatment with water after performing the reaction is also referred to as "post-treatment").

The amount of water to be added into the reaction solution in the post treatment in the esterification reaction step is preferably 10 to 450 parts by mass, more preferably 50 to 300 parts by mass, per 100 parts by mass of HPMC, from a viewpoint of enhancing transportability of the HPMCAS reaction solution and preventing precipitation of HPMCAS particles.

<Precipitation step>

Next, there will be described a precipitation step in which water and a reaction solution containing HPMCAS are mixed to obtain a suspension in which HPMCAS particles are precipitated.

In the precipitation step, the reaction solution and water are introduced into a mixer provided with a rotatable rotor having blades and a perforated plate arranged to surround the rotor in a direction perpendicular to the radial direction of the rotor to allow a suspension, containing the precipitated HPMCAS particles, to pass through the perforated plate to be discharged therethrough.

If a mixer having no perforated plate, surrounding the rotor, is used in the precipitation step, then the suspension may be discharged at a state where the precipitated HPMCAS particles are not uniformly subjected to the mixing action in the mixer. If the mixing action is insufficient, HPMCAS particles will coagulate between themselves, while if the mixing action is excessive, the precipitated HPMCAS particles will become finer, leading to an increase in the amount of fine powder.

According to the present invention, the suspension containing the HPMCAS particles having been precipitated in the precipitation step may be discharged through the perforated plate to make the precipitated HPMCAS particles receive a uniform mixing action, which thereby inhibits coagulation of the precipitated HPMCAS particles between themselves, miniaturization of the precipitated HPMCAS particles and increment of fine powder.

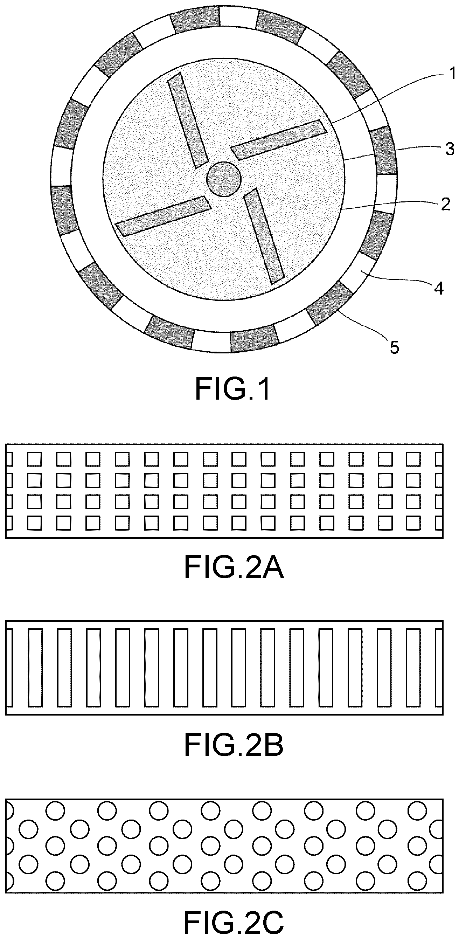

FIG. 1 illustrates a front elevation view of an example of a mixer provided with a rotatable rotor having blades and a perforated plate arranged to surround the rotor in a direction perpendicular to the radial direction of the rotor. The mixer as shown in FIG. 1 includes a rotor 2 and blades 1 around the central axis 3 of the mixer. The mixer shown in FIG. 1 also includes a perforated plate 5, having openings 4, arranged to surround the rotor 2, where the plate extends in a direction perpendicular to the radial direction of the rotor 2.

The number, arrangement, and shape of the blades in the rotatable rotor having blades are not particularly limited. For example, the blades may have a shape extending from the central portion of the rotor to the periphery of the rotor. The shape of the blades, extending from the central portion to the periphery of the rotor, may have a linear, streamlined, or discrete shape.

It is preferred in terms of preventing coagulation of the obtained HPMCAS particles that the shortest distance from the outermost periphery of the blades of the rotatable rotor having blades to the perforated plate surrounding the rotor in a direction perpendicular to the radial direction of the rotor be more than 0 mm and equal to or less than 3.0 mm, more preferably more than 0 mm and equal to or less than 1.0 mm.

It is preferred that the speed of the outermost periphery (peripheral speed) of the blades of the rotatable rotor be 5.0 to 20.0 m/s, more preferably 5.0 to 18.0 m/s, and even more preferably 5.0 to 15.0 m/s in terms of inhibiting micronization of the HPMCAS particles precipitated in the mixer due to an excessive mixing action and precipitating the HPMCAS particles via sufficient mixing action to produce HPMCAS in high yield.

It is preferred in terms of inhibiting adhesion or coagulation of the HPMCAS particles in the suspension, containing the HPMCAS particles, that a rate of shear resulting from the rotation movement of the rotatable rotor be more than or equal to 800 s$^{-1}$, more preferably more than or equal to 10000 s$^{-1}$, and even more preferably more than or equal to 15000 s$^{-1}$. The upper limit of the rate of shear resulting from the rotation movement of the rotatable rotor is not particularly limited, and the rate may, for example, be less than or equal to 100000s$^{-1}$. Here, it is to be noted that the rate of shear (s$^{-1}$) is calculated by dividing the peripheral speed (m/s) at the tip of the blades of the rotatable rotor by the shortest distance (m) from the outermost periphery of the blades of the rotatable rotor to the perforated plate placed outside of the rotor surrounding the rotor in a direction perpendicular to the radial direction of the rotor.

The perforated plate has one or more openings. It is preferred that the openings each have an opening area of 0.1 to 10.0 mm$^2$, more preferably 0.3 to 8.0 mm$^2$, and even more preferably 0.5 to 5.0 mm$^2$ in terms of preventing HPMCAS particles in the suspension containing the HPMCAS particles from being adhered with each other and reducing fine powder generation, caused by the reduction in size of the particle radius of the HPMCAS particles, to enhance the recovery rate of HPMCAS.

Moreover, it is preferred in terms of ensuring the treatment speed of the reaction solution containing HPMCAS that the percentage of the opening areas (aperture ratio) of the perforated plate with respect to the total area of the perforated plate be 1 to 90%, more preferably 10 to 90%, and even more preferably 20 to 90%.

The perforated plate may have any opening whose shape is not particularly limited. For example, as shown in FIG. 2, the shape may be square (FIG. 2A), rectangle (FIG. 2B), round (FIG. 2C) or any other polygonal shape. It is, however, preferred in terms of reducing the produced amount of fine powder that the shape be round to obtain HPMCAS in high yield.

The temperature of the reaction solution containing HPMCAS for use in the precipitation step is preferably 10 to 60°C, more preferably 20 to 50°C in terms of inhibiting adhesion or aggregation of HPMCAS particles in the suspension containing the HPMCAS particles.

As for the viscosity at 40°C of the reaction solution containing HPMCAS for use in the precipitation step, it is preferred in terms of reducing the produced amount of fine powder and obtaining HPMCAS in high yield that such viscosity be 10,000 to 100,000 mPa·s, more preferably 20,000 to 80,000 mPa·s, and even more preferably 30,000 to 50,000 mPa·s. The viscosity of the reaction solution containing HPMCAS can be measured at the shear rate of 10 sec$^{-1}$ according to the viscosity measurement method as set forth in JIS Z8803 using a cone-plate rotational viscometer.

It is preferred in terms of inhibiting adhesion or aggregation of HPMCAS particles in the suspension containing the precipitated HPMCAS particles that the amount of water to be mixed with the reaction solution containing HPMCAS be 100 to 1000 parts by mass, more preferably 150 to 800 parts by mass, and even more preferably 200 to 600 parts by mass per 100 parts mass of the reaction solution containing HPMCAS.

It is also preferred in terms of inhibiting adhesion or aggregation of the HPMCAS particles in the suspension containing the precipitated HPMCAS particles that the temperature of water to be mixed with the reaction solution containing HPMCAS be 5 to 30°C, more preferably 5 to 20°C.

It is preferred in terms of reducing the produced amount of fine powder and producing HPMCAS in a high yield that the HPMCAS particles in the suspension, containing the precipitated HPMCAS particles, have an average particle diameter of 500 to 2000 μm, more preferably 600 to 1800 μm, and even more preferably 700 to 1700 μm.

The average particle diameter of the HPMCAS particles in the suspension, containing the precipitated HPMCAS particles, may be measured by the wet sieving test as set forth in Japanese Industrial Standard JIS Z 8815. That is, when the cumulative mass fractions (%) on sieves of the respective sieve opening sizes are plotted against the sieve opening sizes (μm), where the horizontal axis represents the sieve opening size (μm) and the vertical axis represents the cumulative mass fraction (%) on sieves, the average particle diameter of HPMCAS particles is determined as the value of sieve opening size at the intersection between the line of the 50% the cumulative mass fraction on sieves and a straight line connecting the two plotted points sandwiching the line of the 50% cumulative mass fraction on sieves. The cumulative mass fractions (%) on sieves may be calculated from the masses of HPMCAS particles that remain on the sieves after poring the suspension, containing the precipitated HPMCAS particles, into the sieves and then poring pure water into the HPMCAS particles until the liquid, having passed through the sieves, becomes transparent to thereby transfer the particles into the respective containers for measuring the mass.

It is preferred in terms of producing HPMCAS in high yield that the percentage by mass of fine powder having a diameter of 250 μm or less in the total mass of the HPMCAS particles in the suspension containing the precipitated HPMCAS particles be 15.0% or less, more preferably 14.0% or less, and even more preferably 13.0% or less. The lower limit of the mass percentage is not particularly limited, and it may, for example, be more than 0%.

The mass percentage of the fine powder having a diameter of 250 μm or less in the total mass of the HPMCAS particles in the suspension containing the precipitated HPMCAS particles may be calculated based on the wet sieving test from the total amount by mass of the HPMCAS particles that remain on the respective sieves having the sieve opening sizes of 250 μm or less with respect to the total amount by mass of the HPMCAS particles that remain on the respective sieves after performing the test.

<Washing/ recovering step>

Next, there will be described a washing/recovering step of washing HPMCAS particles in the suspension and recovering the washed HPMCAS particles.

In the washing/recovering step, by-products having been produced in the esterification reaction step such as acetic acid and succinic acid will be removed.

The method of washing is not particularly limited. Examples of the method include a method of repeating the pattern of removing a portion of water in the suspension, containing the HPMCAS particles, by performing, for example, centrifugation, filtration, expression or decantation, and then suspending the HPMCAS particles again in a clean solvent.

The type of the solvent for use in washing is not particularly limited but it is preferred in terms of economy that water be used as a solvent. It is preferred in terms of inhibiting adhesion/coagulation properties of the HPMCAS particles in the suspension containing the HPMCAS particles that the temperature of the solvent for use in washing be 5 to 50°C, more preferably 10 to 40°C.

After the washing/recovering step, the suspension containing HPMCAS particles may be subjected to liquid removal to make a water-containing HPMCAS cake for reducing the load of drying before moving into the drying step. Water is partially removed from the suspension, containing the HPMCAS particles, by a method of removing liquid, which is not particularly limited, such as centrifugation, pressure filtration, vacuum filtration and compression. It is preferred in terms of reducing the drying load that the water content of the water-containing HPMCAS cake be 90% or less, more preferably 80% or less. The lower limit of the water content is not particularly limited but the content may be, for example, 20% or more.

The water content of the water-containing HPMCAS cake may be measured in accordance with the procedure described in "Loss on Drying Test" under "2. Physical Methods" in "General Tests" of the Japanese Pharmacopoeia 18th Edition. More specifically, the water content of the water-containing HPMCAS cake is defined as {(mass of water-containing HPMCAS cake - absolute dry mass of HPMCAS)/(mass of water-containing HPMCAS cake)}x100%, where the term "mass of water-containing HPMCAS cake" refers to the mass of HPMCAS which is precisely quantified in accordance with the procedure described in "Loss on Drying Test" in the Japanese Pharmacopoeia 18th Edition, and the term "absolute dry mass of HPMCAS" refers to the mass of HPMCAS having been dried in accordance with the procedure described in "Loss on Drying Test" in the Japanese Pharmacopoeia 18th Edition.

It is preferred in terms of producing HPMCAS in high yield that the yield after the washing step (hereafter also referred to as "washing yield") be 80% or more, more preferably 85% or more. The upper limit of the yield after the washing step is not particularly limited and the yield may, for example, be less than 100%.

The yield after the washing step is more specifically defined as: {(Absolute dry mass of HPMCAS particles in the suspension that contains the washed HPMCAS particles, or absolute dry mass of HPMCAS in the HPMCAS water-containing cake)/(Theoretical yield of HPMCAS)} × 100%. Here, the term "Theoretical yield of HPMCAS" refers to a theoretical yield that is calculated based on the reaction efficiency of the esterification agent in the esterification reaction step.

<Drying step>

Next, there will be described a drying step of drying the washed HPMCAS particles. It is preferred in terms of preventing aggregation of the HPMCAS particles that the drying temperature (product temperature) in the drying step be 20 to 100°C, more preferably 25 to 80°C. It is preferred in terms of preventing aggregation of the HPMCAS particles that the drying time in the drying step be 5 hours or less, more preferably 3 hours or less. The lower limit of the drying time in the drying step is not particularly limited as long as the water content of the HPMCAS powder can be sufficiently reduced, and the drying time may, for example, be 10 minutes or more.

The devices to be used for the drying are not particularly limited, and the dryers such as a fluid bed dryer, an agitated trough dryer and a vacuum dryer may be used.

[Hydroxypropyl methylcellulose acetate succinate powder]

It is preferred in terms of obtaining HPMCAS powder having favorable flowability that the water content of the dried HPMCAS powder be more than 0% and less than or equal to 5%, more preferably more than or equal to 0.5% and less than or equal to 5%.

Water content of the HPMCAS powder may be determined in accordance with the procedure described in "Loss on Drying Test" under "2. Physical Methods" in "General Tests" of the Japanese Pharmacopoeia 18th Edition. More specifically, the water content of the HPMCAS powder is defined as {(Mass of HPMCAS powder - Absolute dry mass of HPMCAS powder)/(Mass of HPMCAS powder)}×100%, wherein the term "Mass of HPMCAS powder" refers to the mass of HPMCAS powder which is precisely determined in accordance with the procedure described in "Loss on Drying Test" in the Japanese Pharmacopoeia 18th Edition. Further, the term "Absolute dry mass of HPMCAS powder" refers to the mass of HPMCAS powder which was dried in accordance with the procedure described in "Loss on Drying Test" in the Japanese Pharmacopoeia 18th Edition.

The DS of methoxy groups of HPMCAS is preferably 1.10 to 2.20, more preferably 1.40 to 2.00, and even more preferably 1.60 to 2.00. The MS of hydroxypropoxy groups of HPMCAS is preferably 0.10 to 1.00, more preferably 0.20 to 0.80, and even more preferably 0.20 to 0.65.

The DS of acetyl groups of HPMCAS is preferably 0.10 to 2.50, more preferably 0.10 to 1.00, and even more preferably 0.20 to 0.80.

The DS of succinyl groups of HPMCAS is preferably 0.10 to 2.50, more preferably 0.10 to 1.00, and even more preferably 0.10 to 0.60.

It is preferred in terms of solubility that the ratio of the DS of acetyl groups to the DS of succinyl groups in HPMCAS (acetyl groups/succinyl groups) be 0.05 to 4.00, more preferably 0.80 to 3.70.

The DSs of methoxy groups, acetyl groups and succinyl groups of HPMCAS represent the degrees of substitutions, and refer to the average numbers of the methoxy groups, acetyl groups and succinyl groups, respectively, per number of anhydroglucose unit. The MS of the hydroxypropoxy groups of HPMCAS represents a molar substitution of hydroxypropoxy groups, and refers to the average mole number of hydroxypropoxy groups per 1 mol of anhydroglucose.

The DS of methoxy groups, the DS of acetyl groups and the DS of succinyl groups of HPMCAS, and the MS of hydroxypropoxy groups may be obtained by the conversion of the values obtained in accordance with the method in the monographs "Hypromellose acetate ester succinate ester" of the Japanese Pharmacopoeia 18th Edition.

It is preferred that the average diameter of HPMCAS powder as determined by the dry sieving test be more than 300 μm and less than or equal to 1000 μm, more preferably more than 350 μm and less than or equal to 950 μm, and even more preferably more than 350 μm and less than or equal to 900 μm. The average diameter as determined by the dry sieving test may be determined by the dry sieving test as set forth in JIS Z8815. That is, when the cumulative mass fractions on sieves (%) of the respective sieve opening sizes are plotted against the sieve opening sizes (μm), where the horizontal axis represents the sieve opening size (μm) and the vertical axis represents the cumulative mass fraction (%) on sieves, the average particle diameter of HPMCAS particles is determined as the value of sieve opening size at the intersection between the line of the 50% the cumulative mass fraction on sieves and a straight line connecting the two plotted points sandwiching the line of the 50% cumulative mass fraction on sieves.

A loose bulk density of HPMCAS powder is preferably 0.5 g/mL or less, more preferably 0.45 g/mL or less, and even more preferably 0.35 g/mL or less, most preferably 0.30 g/mL or less. The lower limit of the loose bulk density is not particularly limited, and it may, for example, be 0.10 g/mL or more. The term "Loose bulk density" refers to a bulk density in a loosely packed state, and is measured by uniformly supplying a sample through a sieve having openings of 1 mm into a cylindrical container (made of stainless steel) having a diameter of 5.05 cm and a height of 5.05 cm (volume: 100 ml) from above (23 cm above the container) by using a powder characteristics tester, and leveling the supplied sample at the top face of the container for weighing. Specific examples of such powder characteristics tester include a powder characteristics tester of POWDER TESTER PT-S type produced by Hosokawa Micron Corporation.

A tapped bulk density of HPMCAS powder is preferably 0.5 g/mL or less, more preferably 0.45 g/mL or less, even more preferably 0.40 g/mL or less, and most preferably 0.35 g/mL or less. The lower limit of the tapped bulk density is not particularly limited, and it may, for example, be 0.15g/mL or more. The term "tapped bulk density" refers to a bulk density in the state where a sample is closely packed into the cylindrical container by tapping. The term "tapping" refers to an operation in which a cylindrical container filled with a sample is repeatedly dropped from a predetermined height to apply a light impact to the bottom of the container, thereby closely packing the sample in the container. Specifically, as is the case of measuring the "loose bulk density", a sample is supplied into the cylindrical container and the supplied sample is leveled at the top face of the container for weighing, and then the cylindrical container is capped at the top with a cap, after which the cap is filled with the sample up to the upper edge of the cap, and subjected to 180 times of tapping from a tap height of 1.8 cm. After the tapping has been completed, the cap is removed from the container, and then the sample is leveled at the top face of the container for weighing. The bulk density of this state is determined as the tapped bulk density

It is preferred in terms of obtaining favorable flowability that the degree of compression of HPMCAS particles be 10% or less, more preferably 8% or less, even more preferably 6% or less, and most preferably 5% or less. The lower limit of the degree of compression is not particularly limited, and it may be, for example, more than 0%. Herein, the degree of compression refers to the value that is calculated based on the tapped bulk density and the loose bulk density using the following equation:

Degree of compression (%) = {(tapped bulk density - loose bulk density)/tapped bulk density} × 100.

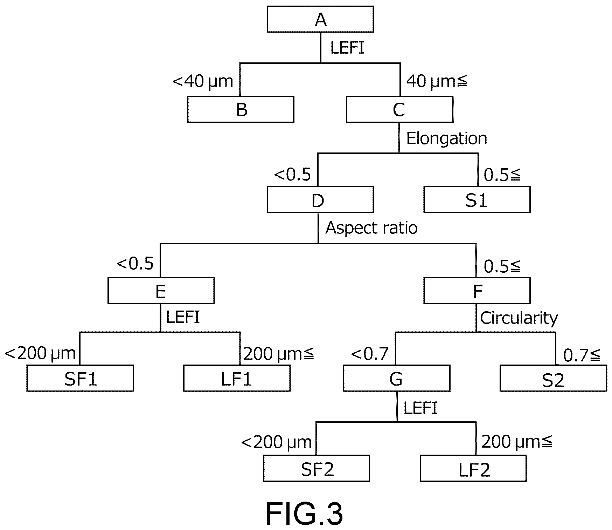

In this specification, HPMCAS particles are categorized into four types of particles: "Long fibrous particles", "Short fibrous particles", "Spherical particles" and "Fine particles". FIG. 3 shows a flowchart summarizing the method of categorizing "All particles A" of HPMCAS powder into four types of particles: "Fine particles B", "Long fibrous particles (LF1 and LF2)", "Short fibrous particles (SF1 and SF2)" and "Spherical particles (S1 and S2)". A volume fraction of each type of particles in HPMCAS powder can be calculated based on a dynamic-image analysis by measuring the shape parameters such as a length of fiber (LEFI), a diameter of fiber (DIFI), an elongation, an aspect ratio and a circularity. Dynamic image analysis is a method in which images of particles dispersed in a fluid such as a gas or a solvent are continuously photographed and are binarized and analyzed to obtain a particle diameter or a particle shape. The analysis may be performed by using, for example, a dynamic-image analysis type particle diameter distribution analyzer, QICPIC/R16 (manufactured by Sympatec GmbH).

All particles A can be categorized into: Particles C having a length of fiber (LEFI) of 40 $\mu$m or more; and Fine particles B having a length of fiber of less than 40 $\mu$m. The LEFI is defined as the length of the longest direct path that connects one end to the other end of the particle within the contour of the particle. A QICPIC/R16 equipped with an M7 lens has a detection limit of 4.7 $\mu$m, and thus fails to detect a particle of an LEFI of less than 4.7 $\mu$m. However, the volume content of the particles having an LEFI of less than 4.7 $\mu$m is extremely small relative to that of the entire HPMCAS powder so that it is negligible for the purposes of the invention.

The particles C having an LEFI of 40 $\mu$m or more are categorized into: First spherical particles (S1) having an elongation of 0.5 or more; and Particles D having an elongation of less than 0.5, wherein the elongation is a ratio (DIFI/LEFI) of a diameter of the fiber (DIFI) to the LEFI of the particle. The DIFI is defined as the minor diameter of a particle, and is calculated by dividing the projection area of the particle by the sum of all lengths of the fiber branches of the particle.

The particles D having an LEFI of 40 $\mu$m or more and an elongation of less than 0.5 are categorized into: Particles E having an aspect ratio of less than 0.5; and Particles F having an aspect ratio of 0.5 or more, wherein the aspect ratio is a ratio (Fmin/Fmax) of the minimum Feret diameter (Fmin) to the maximum Feret diameter (Fmax). Each particle has an aspect ratio of more than 0 and less than or equal to 1. The Feret diameter is the distance between two parallel tangent lines that put the particle therebetween. The maximum Feret diameter (Fmax) is the largest distance between two parallel tangent lines sandwitching the particle in consideration of all possible orientations by changing the directions from 0° to 180°, and the minimum Feret diameter (Fmin) is the minimum distance between two parallel tangent lines sandwiching the particle in consideration of all possible orientations by changing the direction from 0° to 180°.

The Fibrous particles E having an LEFI of 40 $\mu$m or more, and an elongation of less than 0.5, and an aspect ratio of less than 0.5 are categorized into First long fibrous particles (LF1) having an LEFI of 200 $\mu$m or more and first short fibrous particles (SF1) having an LEFI of less than 200 $\mu$m.

The Particles F having an LEFI of 40 $\mu$m or more, and an elongation of less than 0.5, and an aspect ratio of 0.5 or more are categorized into Second spherical particles (S2) having a circularity of 0.7 or more and Fibrous particles G having a circularity of less than 0.7. The circularity is a ratio of the perimeter ($P_{EQPC}$) of a circle that has the same area as the projection area (AP) of the particle to the real perimeter ($P_{real}$) of the particle, and is defined by the equation as defined below. Each particle has a circularity of more than 0 and less than or equal to 1. A particle having a smaller circularity has a more irregular shape. The EQPC is the diameter of a circle of an equal projection area, and is defined as the diameter of a circle that has the same area as the projection area of the particle, and is also referred to as Heywood diameter.

$$\text{Circularity} = P_{EQPC} / P_{real} = 2\sqrt{\pi \cdot A_P} / P_{real}$$

The fibrous particles G having an LEFI of 40 $\mu$m or more, an elongation of less than 0.5, an aspect ratio of 0.5 or more, and a circularity of less than 0.7 are categorized into Second long fibrous particles (LF2) having an LEFI of 200 $\mu$m or more and Second short fibrous particles (SF2) having an LEFI of less than 200 $\mu$m.

The volume ($V_m$) of the fine particles in HPMCAS may be calculated by the following equation where each fine particle is assumed to be a sphere having a diameter of EQPC.

$$V_m = (\pi/6) \times (EQPC)^3 \times N_m$$

where $N_m$ is the number of fine particles in a sample, and EQPC is a median EQPC corresponding to the 50% cumulative value on a number-based cumulative particle diameter distribution curve of fine particles.

In this specification, particles having an LEFI of 40 $\mu$m or more, which are particles other than the fine particles having an LEFI of less than 40 $\mu$m among all of the particles, are categorized into "Long fibrous particles", "Short fibrous particles" and "Spherical particles", which are distinguished from each other based on LEFI, an elongation, an aspect ratio and a circularity, which are shape parameters of the particles.

<Long fibrous particle>

Particles satisfying the following definition of LF1 or LF2 are categorized into "Long fibrous particles".

LF1: Particles having an elongation of less than 0.5, an aspect ratio of less than 0.5, and an LEFI (length of fiber) of 200 μm or more; and

LF2: Particles having an elongation of less than 0.5, an aspect ratio of 0.5 or more, a circularity of less than 0.7, and an LEFI (length of fiber) of 200 μm or more.

The volume ($V_{LF}$) of the long fibrous particles of HPMCAS may be calculated by the following equation wherein each long fibrous particle is assumed to be a cylindrical column having a bottom diameter of DIFI and a height of LEFI.

$$V_{LF} = (\pi/4) \times (DIFI)^2 \times (LEFI) \times N_{LF},$$

where $N_{LF}$ is the number of long fibrous particles in the sample, DIFI is a median DIFI corresponding to the 50% cumulative value on the number-based cumulative particle diameter distribution curve of long fibrous particles, and LEFI is a median LEFI corresponding to the 50% cumulative value on the number-based cumulative particle diameter distribution curve of long fibrous particles. The volume of particles satisfying the definition of LF1 and the volume of particles satisfying the definition of LF2 are calculated in accordance with the above equation, respectively, and a sum of these volumes is the volume of the long fibrous particles in HPMCAS powder.

<Short fibrous particle>

Particles satisfying the following definition of SF1 or SF2 are classified as "Short fibrous particles".

SF1: Particles having an elongation of less than 0.5, an aspect ratio of less than 0.5, and an LEFI (length of fiber) of 40 μm or more and less than 200 μm, and

SF2: Particles having an elongation of less than 0.5, an aspect ratio of 0.5 or more, a circularity of less than 0.7, and an LEFI (length of fiber) of 40 μm or more and less than 200 11m.

The volume ($V_{SF}$) of the short fibrous particles in HPMCAS may be calculated by the following equation where each short fibrous particle is assumed to be a cylindrical column having a bottom diameter of DIFI and a height of LEFI, in the same manner as the above-defined long fibrous particles.

$$V_{SF} = (\pi/4) \times (DIFI)^2 \times (LEFI) \times N_{SF},$$

where $N_{SF}$ is the number of short fibrous particles in the sample, DIFI is a median DIFI corresponding to the 50% cumulative value on the number-based cumulative particle diameter distribution curve of short fibrous particles, and LEFI is a median LEFI corresponding to the 50% cumulative value on the number-based cumulative particle diameter distribution curve of short fibrous particles.

The volume of particles satisfying the definition of SF1 and the volume of particles satisfying the definition of SF2 are calculated in accordance with the above equation, respectively, and a sum of these volumes is defined as the volume of the short fibrous particles in HPMCAS powder.

<Spherical Particle>

Particles satisfying the definition S1 or S2 is categorized into "Spherical particles".

S1: Particles having an elongation of 0.5 or more, and an LEFI (length of fiber) of 40 μm or more, and

S2: Particles having an elongation of less than 0.5, an aspect ratio of 0.5 or more, a circularity of 0.7 or more, and an LEFI (length of fiber) of 40 μm or more.

The volume (Vs) of the spherical particles in HPMCAS may be calculated by the equation as defined below, wherein each spherical particle is assumed to be a sphere having a diameter of EQPC.

$$V_S = (\pi/6) \times (EQPC)^3 \times N_S,$$

where Ns is the number of spherical particles in the sample, and EQPC is a median EQPC corresponding to the 50% cumulative value on the number-based cumulative particle diameter distribution curve of spherical particles.

The volume of the particles satisfying the definition S1 and the volume of the particles satisfying the definition S2 are calculated in accordance with the above equation, respectively, and a sum of these volumes is defined as the volume of the spherical particles in HPMCAS powder.

The volume fraction of each type of particle in HPMCAS powder may be calculated from the following corresponding equation on the basis of the above defined volumes of $V_m$, $V_{LF}$, $V_{SF}$ and $V_S$.

$$\text{Volume fraction of fine particles} = \{V_m/(V_m + V_{LF} + V_{SF} + V_S)\} \times 100$$

$$\text{Volume fraction of long fibrous particles} = \{V_{LF}/(V_m + V_{LF} + V_{SF} + V_S)\} \times 100$$

$$\text{Volume fraction of short fibrous particles} = \{V_{SF}/(V_m + V_{LF} + V_{SF} + V_S)\} \times 100$$

$$\text{Volume fraction of spherical particles} = \{V_S/(V_m + V_{LF} + V_{SF} + V_S)\} \times 100$$

The volume fraction of each type of particle, which are long fibrous particles, short fibrous particles, spherical particles and fine particles, was determined as follows. A dynamic image analysis type particle diameter distribution analyzer QICPIC/R16 (manufactured by Sympatec GmbH) equipped with a quantitative feeder VIBRI/L, an airflow type disperser RODOS/L and an M7 lens was used for performing measurements under the conditions of a frame rate of 500 Hz, an injector of 4 mm, a dispersion pressure of 1 bar. The graphics of the imaged particles were analyzed by analysis software WINDOXS Version 5.9.1.1 to determine a number-based median EQPC, a number-based median LEFI, a number-based median DIFI, an elongation, an aspect ratio and a circularity with respect to each type of particles. The volume fraction of each type of particle was calculated by the above equation based on the measured values. It is noted that M7 was used as the division of analysis.

It is preferred in terms of obtaining HPMCAS powder having favorable flowability that the volume fraction of the spherical particles in HPMCAS powder be 50% or more, more preferably 60% or more, and even more preferably 65% or more. The upper limit of the volume fraction is not particularly limited, and the fraction may, for example, be less than 100%.

WORKING EXAMPLES

The present invention is described in detail hereunder with reference to working and comparative examples; the present invention shall not be limited in any way to the following working examples.

The methods as described below were used to measure or calculate the average particle diameter of the HPMCAS particles in the suspension containing the precipitated HPMCAS particles after the precipitation step, and a water content and washing yield of the water-containing HPMCAS cake that was obtained in the washing/recovering step.

The above-mentioned methods were also used for measuring or calculating other physical properties unless otherwise stated herein.

• Average Particle Diameter of HPMCAS particles in Suspension Containing Precipitated HPMCAS particles

The average particle diameter of the HPMCAS particles was determined by the wet sieving test as set forth in JIS Z8815. That is, when the cumulative mass fractions (%) on sieves of the respective sieve opening sizes were plotted against the sieve opening sizes ($\mu$m), where the horizontal axis represents the sieve opening size ($\mu$m) and the vertical axis represents the cumulative mass fraction (%) on sieves, the average particle diameter of HPMCAS particles was determined as the value of sieve opening size at the intersection between the line of the 50% the cumulative mass fraction on sieves and a straight line connecting the two plotted points sandwiching the line of the 50% cumulative mass fraction on sieves. The cumulative mass fractions (%) on the sieves were calculated from the masses of HPMCAS particles that remained on the sieves after poring the suspension, containing the HPMCAS particles, into the sieves and then poring pure water into the HPMCAS particles until the liquid having passed through the sieves became transparent to thereby transfer the particles into the respective containers for measuring the mass. Each sieve had a plain weave net and was of a cylindrical shape with a diameter of 200 mm. The sieves had opening sizes of 4,000 $\mu$m, 1,700 $\mu$m, 1,000 $\mu$m, 500 $\mu$m, 250 $\mu$m, 177 $\mu$m, 150 $\mu$m, 106 $\mu$m and 75 $\mu$m, respectively. Further, a manual wet sieving method was used as a method of sieving.

• Water Content and Washing Yield of Water-containing HPMCAS Cake

The water content of the water-containing HPMCAS cake, obtained in the washing/recovering step, was measured in accordance with the procedure described in "Loss on Drying Test" under "2. Physical Methods" in "General Tests" in the Japanese Pharmacopoeia 18th Edition. More specifically, the water content of the water-containing HPMCAS cake was defined as: {(Total mass of water-containing HPMCAS cake - Absolute dry mass of HPMCAS)/(Total mass of water-containing HPMCAS cake)]×100%, where the term "Total mass of water-containing HPMCAS cake" refers to the mass of the water-containing HPMCAS cake which was precisely quantified in accordance with the procedure described in "Loss on Drying Test" in the Japanese Pharmacopoeia 18th Edition. Further, the term "Absolute dry mass of HPMCAS" refers to the mass of HPMCAS having been dried in accordance with the procedure described in "Loss on Drying Test" in the Japanese Pharmacopoeia 18th Edition.

Moreover, the washing yield was calculated from the theoretical yield estimated from the prepared amount of the ingredient and the mass and water content of the water-containing HPMCAS cake, obtained after the washing step, using the following formula:

Washing yield (%) = {Mass of water-containing HPMCAS cake × (100 - Water content of water-containing HPMCAS cake)/100}/Theoretical yield.

Synthesis Example 1

Into a 5L kneader equipped with twin-shaft stirrer were put 700 g of HPMC whose DS of methoxy groups was 1.87, whose MS of hydroxypropoxy groups was 0.24, and whose 2% by mass aqueous solution at 20°C had a viscosity of 3.4 mPa·s; 1120 g of acetic acid; 358 g of acetic anhydride; 185 g of succinic anhydride; and 312 g of sodium acetate, and stirring was then performed at 85°C for 5 hours to cause an esterification reaction. After stirring them for 5 hours, 1471 g of water was added into the kneader to stop the reaction. As a result, 4146 g of reaction solution containing the HPMCAS-1 was obtained. Table 1 shows the equivalence relationship in the esterification reaction.

Synthesis Example 2

There was obtained 4171 g of reaction solution containing HPMCAS-2 by carrying out similar operations as the synthesis example 1, except that the amount of acetic anhydride was changed to 485 g, the amount of succinic anhydride was changed to 74 g and the amount of water was changed to 1480 g. Table 1 shows the equivalence relationship in the esterification reaction.

Table 1

| | HPMC | | | | | Acetic acid | | Acetic anhydride | | Succinic anhydride | | Sodium acetate | | Reaction temperature | Reaction time | HPMCAS | | | | |
|---|---|---|---|---|---|---|---|---|---|---|---|---|---|---|---|---|---|---|---|---|
| | MeO group | HPO group | Viscosity | g | mol | g | mol/mol HPMC | g | mol/mol HPMC | g | mol/mol HPMC | g | mol/mol HPMC | °C | hr | MeO group | HPO group | Ac group | Suc group | Ac/Suc |
| | DS | MS | mPa·s | | | | | | | | | | | | | DS | MS | DS | DS | - |
| Synthesis Example 1 | 1.87 | 0.24 | 3.4 | 700 | 3.46 | 1120 | 5.38 | 358 | 1.01 | 185 | 0.53 | 312 | 1.10 | 85 | 5.0 | 1.87 | 0.24 | 0.51 | 0.37 | 1.38 |
| Synthesis Example 2 | 1.87 | 0.24 | 3.4 | 700 | 3.46 | 1120 | 5.38 | 485 | 1.37 | 74 | 0.21 | 312 | 1.10 | 85 | 5.0 | 1.87 | 0.24 | 0.66 | 0.17 | 3.88 |

*In Table 1, HPMC stands for hydroxypropyl methylcellulose and HPMCAS stands for hydroxypropyl methylcellulose acetate succinate.

*In Table 1, "MeO group" represents a methoxy group, "HPO group" represents a hydropropoxy group, "Ac group" represents an acetyl group and "Suc group" represents a succinyl group.

Working Example 1

A reaction solution containing the HPMCAS-1 (having a viscosity of 45,000 mPa·s at the shear rate of 10 sec$^{-1}$) prepared to have a temperature of 40°C was put at the rate of 2.4 kg/minute together with cold water having a temperature of 10°C into a mixer (Type 200L Inline Mixer manufactured by Silverson Nippon Limited) equipped with a rotor and a perforated plate to thereby obtain a suspension containing precipitated HPMCAS particles.

The mixer had a structure having a rotatable rotor of a diameter of 50.8 mm equipped with straight blades around which a perforated plate having a plurality of round openings each having a diameter of 1.5 mm (each opening has an opening area of 1.8 mm$^2$) surrounds in a direction perpendicular to the radial direction of the rotor. The rotational speed of the rotor was 2400 rpm, the peripheral speed of the outermost circumference of the blades in the rotor was 6.4 m/s, and the shear rate generated by the rotational motion of the rotor was 31900 s$^{-1}$. The mass of the mixed cold water was 540 parts by mass per 100 parts by mass of the reaction solution containing the HPMCAS-1.

The average particle diameter of the HPMCAS particles in the suspension and the percentage by mass of fine powder having a diameter of 250 μm or less relative to the mass of the HPMCAS particles contained in the suspension were evaluated in accordance with the wet sieving method, and it turned out that the average particle diameter was 1175 μm and the percentage by mass of fine powder was 5.4% by mass.

The suspension was filtrated through a sieve of 83 mesh (opening size of 180 μm) until the filtrate was no longer discharged.

The water-containing HPMCAS cake was obtained by washing the HPMCAS particles obtained via filtration by repeating the following process three times; the process comprised re-suspension of HPMCAS particles, obtained via filtration, in water of 20°C, and then filtration on an 83 mesh sieve (opening size of 180 μm) until the filtrate was no longer discharged. The water content of the water-containing HPMCAS cake was 68.0%, and the yield was 90.2%.

The water-containing HPMCAS cake was dried at 50°C using a fluid-bed dryer to obtain HPMCAS powder. Table 2 shows physical properties of the obtained HPMCAS powder.

Working Example 2

There was obtained HPMCAS powder by carrying out similar operations as the working example 1, except that the mass of the cold water to be mixed therewith was changed to 300 parts by mass per 100 parts by mass of the reaction solution containing the HPMCAS-1.

The average particle diameter, percentage of fine powder and washing yield of the HPMCAS particles in the suspension, and physical properties of the HPMCAS powder obtained as a final product are as shown in Table 2.

Working Example 3

There was obtained HPMCAS powder by carrying out similar operations as the working example 1, except that the mass of the cold water to be mixed therewith was changed to 250 parts by mass per 100 parts by mass of the reaction solution containing the HPMCAS-1.

The average particle diameter, percentage of fine powder and washing yield of the HPMCAS particles in the suspension, and physical properties of the HPMCAS powder obtained as a final product are as shown in Table 2.

Working Example 4

There was obtained HPMCAS powder by carrying out similar operations as the working example 1, except that the rotational speed of the rotor of the mixer was changed to 3600 rpm, the peripheral speed of the outermost circumference of the blades in the rotor was changed to 9.6 m/s, and the shear rate generated by the rotational motion of the rotor was changed to 47900 s$^{-1}$, and that the mass of the cold water to be mixed therewith was changed to 580 parts by mass per 100 parts by mass of the reaction solution containing the HPMCAS-1.

The average particle diameter, percentage of fine powder and washing yield of the HPMCAS particles in the suspension, and physical properties of the HPMCAS powder obtained as a final product are as shown in Table 2.

Working Example 5

There was obtained HPMCAS powder by carrying out similar operations as the working example 1, except that the rotational speed of the rotor of the mixer was changed to 3600 rpm, the peripheral speed of the outermost circumference of the blades in the rotor was changed to 9.6 m/s, and the shear rate generated by the rotational motion of the rotor was changed to 47900 s$^{-1}$, and that the mass of the cold water to be mixed therewith was changed to 420 parts by mass per 100 parts by mass of the reaction solution containing the HPMCAS-1.

The average particle diameter, percentage of fine powder and washing yield of the HPMCAS particles in the suspension, and physical properties of the HPMCAS powder obtained as a final product are as shown in Table 2.

Working Example 6

There was obtained HPMCAS powder by carrying out similar operations as the working example 1, except that the diameter of each opening in the perforated plate was changed to 1.0 mm (each opening had an opening area of 0.8 mm$^2$), and that the mass of the cold water to be mixed therewith was changed to 390 parts by mass per 100 parts by mass of the reaction solution containing the HPMCAS-1.

The average particle diameter, percentage of fine powder and washing yield of the HPMCAS particles in the suspension, and physical properties of the HPMCAS powder obtained as a final product are as shown in Table 2.

Working Example 7

There was obtained HPMCAS powder by carrying out similar operations as the working example 1, except that the diameter of each opening in the perforated plate was changed to 2.5 mm (each opening had an opening area of 4.9 mm$^2$), and that the mass of the cold water to be mixed therewith was changed to 330 parts by mass per 100 parts by mass of the reaction solution containing the HPMCAS-1.

The average particle diameter, percentage of fine powder and washing yield of the HPMCAS particles in the suspension, and physical properties of the HPMCAS powder obtained as a final product are as shown in Table 2.

Working Example 8

There was obtained HPMCAS powder by carrying out similar operations as the working example 1, except that, by using a mixer (Type 200LS Inline Mixer manufactured by Silverson Nippon Limited) with a rotor having a diameter of 69.9 mm, the diameter of each opening in the perforated plate was changed to 1.0 mm (each opening had an opening area of 0.8 mm$^2$), the rotational speed of the rotor of the mixer was changed to 3600 rpm, the peripheral speed of the outermost circumference of the blades in the rotor was changed to 13.1 m/s, and the shear rate generated by the rotational motion of the rotor was changed to 65500 s$^{-1}$, and that the mass of the cold water to be mixed therewith was changed to 400 parts by mass per 100 parts by mass of the reaction solution containing the HPMCAS-1.

The average particle diameter, percentage of fine powder and washing yield of the HPMCAS particles in the suspension, and physical properties of the HPMCAS powder obtained as a final product are as shown in Table 2.

Working Example 9

There was obtained HPMCAS powder by carrying out similar operations as the working example 1, except that the perforated plate employed square openings each having a side length of 1.5 mm (each opening had an opening area of 2.3 mm$^2$), and that the mass of the cold water to be mixed therewith was changed to 300 parts by mass per 100 parts by mass of the reaction solution containing the HPMCAS-1.

The average particle diameter, percentage of fine powder and washing yield of the HPMCAS particles in the suspension, and physical properties of the HPMCAS powder obtained as a final product are as shown in Table 2.

Working Example 10

There was obtained HPMCAS powder by carrying out similar operations as the working example 1, except that the perforated plate employed rectangle openings each having a width of 1.5 mm, and that the mass of the cold water to be mixed therewith was changed to 300 parts by mass per 100 parts by mass of the reaction solution containing the HPMCAS-1.

The average particle diameter, percentage of fine powder and washing yield of the HPMCAS particles in the suspension, and physical properties of the HPMCAS powder obtained as a final product are as shown in Table 2.

Working Example 11

There was obtained HPMCAS powder by carrying out similar operations as the working example 1, except that a reaction solution, prepared to have a temperature of 40°C, containing the HPMCAS-2 (having a viscosity of 37,000 mPa·s at the shear rate of 10 sec$^{-1}$) was used.

The average particle diameter, percentage of fine powder and washing yield of the HPMCAS particles in the suspension, and physical properties of the HPMCAS powder obtained as a final product are as shown in Table 2.

Working Example 12

There was obtained HPMCAS powder by carrying out similar operations as the working example 1, except that a reaction solution prepared to have a temperature of 40°C containing the HPMCAS-2 was used, and that the mass of the cold water to be mixed therewith was changed to 290 parts by mass per 100 parts by mass of the reaction solution containing the HPMCAS-2.

The average particle diameter, percentage of fine powder and washing yield of the HPMCAS particles in the suspension, and physical properties of the HPMCAS powder obtained as a final product are as shown in Table 2.

Working Example 13

There was obtained HPMCAS powder by carrying out similar operations as the working example 1, except that a reaction solution prepared to have a temperature of 40°C containing the HPMCAS-2 was used, and that the mass of the cold water to be mixed therewith was changed to 200 parts by mass per 100 parts by mass of the reaction solution containing the HPMCAS-2.

The average particle diameter, percentage of fine powder and washing yield of the HPMCAS particles in the suspension, and physical properties of the HPMCAS powder obtained as a final product are as shown in Table 2.

Comparative Example 1

A reaction solution prepared to have a temperature of 40°C containing the HPMCAS-1 was introduced at the rate of 2.4 kg/minute together with cold water having a temperature of 10°C into a mixer (LABOLUTION Pipeline-Homo Mixer manufactured by PRIMIX Corporation) having no perforated plate to thereby obtain a suspension containing precipitated HPMCAS particles.

The mixer had a stator and a rotor having a diameter of 28.0 mm but the stator had no openings, and therefore the suspension containing the HPMCAS particles will be discharged through a gap (clearance) between the rotor and the stator. The rotor had straight blades. The rotational speed of the rotor was 4360 rpm, the peripheral speed of the outermost circumference of the blades in the rotor was 6.4 m/s, and the shear rate generated by the rotational motion of the rotor was 8667 $s^{-1}$. The mass of the cold water to be mixed therewith was 400 parts by mass per 100 parts by mass of the reaction solution containing the HPMCAS-1.

The average particle diameter of the HPMCAS particles in the suspension and the percentage by mass of fine powder having a diameter of 250 $\mu$m or less relative to the mass of the HPMCAS particles contained in the suspension were evaluated in accordance with the wet sieving method, and it turned out that the average particle diameter was 1218 $\mu$m and the percentage by mass of fine powder was 17.8% by mass.

The suspension was filtrated through a sieve of 83 mesh (opening size of 180 $\mu$m) until the filtrate was no longer discharged. The water-containing HPMCAS cake was obtained by washing the HPMCAS particles obtained via filtration by repeating the following process three times; the process comprised re-suspension of HPMCAS particles, obtained via filtration, in water of 20°C, and then filtration on an 83 mesh sieve (opening size of 180 $\mu$m) until the filtrate was no longer discharged. It turned out that the water content of the water-containing HPMCAS cake was 70.0%, and the yield was 79.1%.

The water-containing HPMCAS cake was dried at 50°C using a fluid-bed dryer to obtain HPMCAS powder. Table 2 shows physical properties of the obtained HPMCAS powder.

Comparative Example 2

There was obtained HPMCAS powder by carrying out similar operations as the comparative Example 1, except that the rotational speed of the rotor of the mixer was changed to 6550 rpm, the peripheral speed of the outermost circumference of the blades in the rotor was changed to 9.6 m/s, and the shear rate generated by the rotational motion of the rotor was changed to 12800 $s^{-1}$.

The average particle diameter, percentage of fine powder and washing yield of the HPMCAS particles in the suspension, and physical properties of the HPMCAS powder obtained as a final product are as shown in Table 2.

Comparative Example 3

There was obtained HPMCAS powder by carrying out similar operations as the comparative Example 1, except that the rotational speed of the rotor of the mixer was changed to 8930 rpm, the peripheral speed of the outermost circumference of the blades in the rotor was changed to 13.1 m/s, and the shear rate generated by the rotational motion of the rotor was changed to 17467 $s^{-1}$.

The average particle diameter, percentage of fine powder and washing yield of the HPMCAS particles in the suspension, and physical properties of the HPMCAS powder obtained as a final product are as shown in Table 2.

Comparative Example 4

1.0 kg of a reaction solution prepared to have a temperature of 50°C containing the HPMCAS-1 was put into 4.0 kg of water having a temperature of 20°C to make particles.
As to the rest of the operations, operations similar as the comparative example 1 were carried out to obtain HPMCAS powder.
The average particle diameter, percentage of fine powder and washing yield of the HPMCAS particles in the suspension, and physical properties of the HPMCAS powder obtained as a final product are as shown in Table 2.

Comparative Example 5

There was obtained HPMCAS powder by carrying out similar operations as the comparative example 1, except that a reaction solution prepared to have a temperature of 40°C containing the HPMCAS-2 was used in a mixer having no perforated plate, and that the mass of the cold water to be mixed therewith was changed to 210 parts by mass per 100 parts by mass of the reaction solution containing the HPMCAS-2.
The average particle diameter, percentage of fine powder and washing yield of the HPMCAS particles in the suspension, and physical properties of the HPMCAS powder obtained as a final product are as shown in Table 2.

Table 2A

| Working Example / Comparative Example | Conditions of precipitation step | | | | | | | |
|---|---|---|---|---|---|---|---|---|
| | Ingredient for use in precipitation | Mixer type | Shape of opening | Sieve opening diameter | Opening area per one opening | Peripheral speed of outermost circumference of blades in rotor | Shear rate | Added amount of water per 100 parts by mass of reaction solution |
| | [-] | [-] | [-] | [mm] | [mm$^2$] | [m/s] | [1/s] | [parts by mass] |
| Working Example 1 | Synthesis Example 1 | Mixer with screen | Round | 1.5 | 1.8 | 6.4 | 31900 | 540 |
| Working Example 2 | Synthesis Example 1 | Mixer with screen | Round | 1.5 | 1.8 | 6.4 | 31900 | 300 |
| Working Example 3 | Synthesis Example 1 | Mixer with screen | Round | 1.5 | 1.8 | 6.4 | 31900 | 250 |
| Working Example 4 | Synthesis Example 1 | Mixer with screen | Round | 1.5 | 1.8 | 9.6 | 47900 | 580 |
| Working Example 5 | Synthesis Example 1 | Mixer with screen | Round | 1.5 | 1.8 | 9.6 | 31900 | 420 |
| Working Example 6 | Synthesis Example 1 | Mixer with screen | Round | 1.0 | 0.8 | 6.4 | 31900 | 390 |
| Working Example 7 | Synthesis Example 1 | Mixer with screen | Round | 2.5 | 4.9 | 6.4 | 31900 | 330 |

(continued)

| Working Example / Comparative Example | Conditions of precipitation step | | | | | | | |
|---|---|---|---|---|---|---|---|---|
| | Ingredient for use in precipitation | Mixer type | Shape of opening | Sieve opening diameter | Opening area per one opening | Peripheral speed of outermost circumference of blades in rotor | Shear rate | Added amount of water per 100 parts by mass of reaction solution |
| | [-] | [-] | [-] | [mm] | [mm$^2$] | [m/s] | [1/s] | [parts by mass] |
| Working Example 8 | Synthesis Example 1 | Mixer with screen | Round | 1.0 | 0.8 | 13.1 | 65500 | 400 |
| Working Example 9 | Synthesis Example 1 | Mixer with screen | Square | 1.5* | 2.3 | 6.4 | 31900 | 300 |
| Working Example 10 | Synthesis Example 1 | Mixer with screen | Rectangle | 1.5** | 9.9 | 6.4 | 31900 | 300 |
| Comparative Example 1 | Synthesis Example 1 | Line mixer | - | None | - | 6.4 | 8667 | 400 |
| Comparative Example 2 | Synthesis Example 1 | Line mixer | - | None | - | 9.6 | 12800 | 400 |
| Comparative Example 3 | Synthesis Example 1 | Line mixer | - | None | - | 13.1 | 17467 | 400 |
| Comparative Example 4 | Synthesis Example 1 | Stirring in tank | - | - | - | - | - | 640 |
| Working Example 11 | Synthesis Example 2 | Mixer with screen | Round | 1.5 | 1.8 | 6.4 | 31900 | 540 |
| Working Example 12 | Synthesis Example 2 | Mixer with screen | Round | 1.5 | 1.8 | 6.4 | 31900 | 290 |
| Working Example 13 | Synthesis Example 2 | Mixer with screen | Round | 1.5 | 1.8 | 9.6 | 31900 | 200 |
| Comparative Example 5 | Synthesis Example 2 | Line mixer | - | - | - | 6.4 | 8667 | 210 |

* indicates side length
** indicates the width of minor diameter

Table 2B

| Working Example / Comparative Example | Properties of precipitates | | Washing step | Physical properties of HPMCAS powder | | | | | | |
|---|---|---|---|---|---|---|---|---|---|---|
| | Average particle diameter determined by wet sieving method | Percentage of fine powder of 250 µm or less | Washing yield | Water content | Average particle diameter | Loose bulk density | Tapped bulk density | Degree of compression | Fraction of spherical particles based on dynamic-image analysis |
| | [µm] | [% by mass] | [%] | [%] | [µm] | [g/mL] | [g/mL] | [%] | [vol%] |
| Working Example 1 | 1175 | 5.4 | 90.2 | 1.2 | 521 | 0.261 | 0.263 | 0.8 | 89.3 |
| Working Example 2 | 1326 | 7.4 | 91.1 | 1.5 | 789 | 0.249 | 0.252 | 1.2 | 86.5 |
| Working Example 3 | 1389 | 4.1 | 91.8 | 1.1 | 802 | 0.244 | 0.249 | 2.0 | 83.2 |
| Working Example 4 | 772 | 9.7 | 88.1 | 1.6 | 521 | 0.281 | 0.286 | 1.7 | 78.5 |
| Working Example 5 | 874 | 8.9 | 89.0 | 0.9 | 582 | 0.279 | 0 283 | 1.4 | 77.7 |
| Working Example 6 | 729 | 9.1 | 87.9 | 1.8 | 392 | 0.290 | 0.296 | 2.0 | 81.2 |
| Working Example 7 | 1562 | 2.5 | 92.3 | 1.5 | 803 | 0.259 | 0.264 | 1.9 | 79.2 |
| Working Example 8 | 1035 | 12.1 | 89.2 | 1.6 | 668 | 0.294 | 0.305 | 3.6 | 82.9 |
| Working Example 9 | 1355 | 2.6 | 91.6 | 1.9 | 792 | 0.291 | 0.299 | 2.7 | 74.3 |
| Working Example 10 | 1617 | 3.5 | 92.2 | 1.1 | 891 | 0.280 | 0.293 | 4.4 | 70.2 |
| Comparative Example 1 | 1218 | 17.8 | 79.1 | 1.3 | 545 | 0.235 | 0.266 | 11.7 | 22.9 |
| Comparative Example 2 | 1053 | 19.2 | 76.4 | 1.8 | 490 | 0.242 | 0.279 | 13.3 | 23.1 |
| Comparative Example 3 | 879 | 21.2 | 75.6 | 1.5 | 401 | 0.238 | 0.271 | 12.2 | 23.4 |
| Comparative Example 4 | 1389 | 8.8 | 89.4 | 1.4 | 892 | 0.212 | 0.261 | 18.8 | 10.1 |
| Working Example 11 | 950 | 12.9 | 86.9 | 1.2 | 459 | 0.249 | 0.253 | 1.6 | 68.5 |
| Working Example 12 | 832 | 12.7 | 88.7 | 1.5 | 389 | 0.232 | 0.239 | 2.9 | 79.2 |
| Working Example 13 | 869 | 12.0 | 89.5 | 1.8 | 427 | 0.251 | 0.258 | 2.7 | 73.7 |
| Comparative Example 5 | 859 | 23.2 | 79.1 | 1.8 | 522 | 0.251 | 0.289 | 13.1 | 23.1 |

EP 4 497 760 A1

19

The HPMCAS particles of the working exapmles 1 to 13 in which the particles were precipitated in the precipitation step using the mixers each provided with a rotatable rotor and a perforated plate arranged to surround the rotor in a direction perpendicular to the radial direction of the rotor had lesser percentages of fine powder having a diameter of 250µm or less in the suspension and were higher in washing yields compared to the HPMCAS particles of the comparative examples 1 to 3 and 5 in which the particles were precipitated using a mixer having no perforated plate.

Further, the dried HPMCAS powders of the working examples 1 to 13 exhibited lower degrees of compression compared to the powders of the comparative Examples 1 to 5, thus resulting in powder having favorable flowability.

Reference Numeral

1 Blade
2 Rotor
3 Central axis
4 Opening
5 Perforated plate

**Claims**

1. A method of producing hydroxypropyl methylcellulose acetate succinate powder comprising the steps of:

esterifying hydroxypropyl methylcellulose with an acetylating agent and a succinoylating agent in the presence of an aliphatic carboxylic acid to prepare a reaction solution containing hydroxypropyl methylcellulose acetate succinate;
introducing the reaction solution and water into a mixer provided with a rotatable rotor having blades and a perforated plate arranged to surround the rotor in a direction perpendicular to a radial direction of the rotor for precipitation, and allowing a suspension, containing precipitated hydroxypropyl methylcellulose acetate succinate particles, to pass through the perforated plate to be discharged therethrough;
washing the hydroxypropyl methylcellulose acetate succinate particles in the suspension and recovering the washed hydroxypropyl methylcellulose acetate succinate particles; and
drying the washed hydroxypropyl methylcellulose acetate succinate particles.

2. The method according to claim 1, wherein the perforated plate has openings each having an opening area of 0.1 to 10.0 mm$^2$.

3. The method according to claim 1 or 2, wherein a peripheral speed of the outermost circumference of the blades is 5.0 to 20.0 m/s.

4. The method according to claim 1 or 2, wherein 200 to 600 parts by mass of water per 100 parts by mass of the reaction solution is added into the reaction solution.

5. The method according to claim 1 or 2, wherein an average particle diameter of the hydroxypropyl methylcellulose acetate succinate particles is 500 to 2000 µm when the diameter is estimated from particle size distribution of the hydroxypropyl methylcellulose acetate succinate particles in the suspension in accordance with a wet sieving test as set forth in JIS Z8815, and wherein a mass percentage of the particles having a diameter of 250 µm or less in the total mass of the particles is 15.0% or less.

6. A hydroxypropyl methylcellulose acetate succinate powder, wherein an average particle diameter of the hydroxypropyl methylcellulose acetate succinate powder as determined in accordance with a dry sieving test as set forth in JIS Z8815 is 300 µm or more and 1000 µm or less, the powder has a loose bulk density of 0.30g/mL or less, and a degree of compression of the powder, defined as a ratio of the difference between a tapped bulk density and a loose bulk density relative to the tapped bulk density, is 10% or less.

FIG.1

FIG.2A

FIG.2B

FIG.2C

FIG.3

**EUROPEAN SEARCH REPORT**

Application Number

EP 24 19 0719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 290 444 B1 (SHINETSU CHEMICAL CO [JP]) 15 December 2021 (2021-12-15) | 1-5 | INV. C08B13/00 C08L1/32 |
| A | * example 1; table 2; claims 1-2; figure 1 * | 6 | |
| | ----- | | |
| X | EP 2 837 391 A1 (SHINETSU CHEMICAL CO [JP]) 18 February 2015 (2015-02-18) * table 1 * | 6 | |
| | ----- | | |

**TECHNICAL FIELDS SEARCHED (IPC)**

C08B
C08L

The present search report has been drawn up for all claims

| Place of search | Date of completion of the search | Examiner |
|---|---|---|
| Munich | 19 November 2024 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 24 19 0719

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | | Publication date | Patent family member(s) | | Publication date |
|---|---|---|---|---|---|
| EP 3290444 | B1 | 15-12-2021 | CN | 107793486 A | 13-03-2018 |
| | | | EP | 3290444 A1 | 07-03-2018 |
| | | | JP | 6644656 B2 | 12-02-2020 |
| | | | JP | 2018035215 A | 08-03-2018 |
| | | | KR | 20180025207 A | 08-03-2018 |
| | | | TW | 201821439 A | 16-06-2018 |
| | | | US | 2018057612 A1 | 01-03-2018 |
| EP 2837391 | A1 | 18-02-2015 | CN | 104371030 A | 25-02-2015 |
| | | | EP | 2837391 A1 | 18-02-2015 |
| | | | JP | 6162662 B2 | 12-07-2017 |
| | | | JP | 2015057380 A | 26-03-2015 |
| | | | KR | 20150020073 A | 25-02-2015 |
| | | | US | 2015044289 A1 | 12-02-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4226981 A
- JP 2015512456 A
- JP 2017501239 A

**Non-patent literature cited in the description**

- General Tests. Japanese Pharmacopoeia
- Loss on Drying Test. Japanese Pharmacopoeia
- Hypromellose acetate ester succinate ester. *Japanese Pharmacopoeia*